# EUROPÄISCHE PATENTANMELDUNG

(11) **EP 3 379 670 A1**
(43) Veröffentlichungstag der Anmeldung: **26.09.2018**
(21) Anmeldenummer: 17162579.1
(22) Anmeldetag: 23.03.2017
(51) Int. Cl.: H02H 3/087, H02H 7/26, H02H 7/30, H02J 1/08

(54) **VERFAHREN ZUM BETREIBEN EINER STROMVERTEILUNGSVORRICHTUNG UND STROMVERTEILUNGSVORRICHTUNG**

(71) Anmelder: Siemens Aktiengesellschaft, 80333 München (DE)
(72) Erfinder: Schierling, Hubert, 91052 Erlangen (DE); Weis, Benno, 91334 Hemhofen (DE)

(57) **Zusammenfassung**

Die Erfindung betrifft ein Verfahren zum Betreiben einer Stromverteilungsvorrichtung (2) zum Anschluss einer Anzahl von Lasten (4a, 4b) an eine Gleichspannungsversorgung (6), mit einer Anzahl von zwischen der Gleichspannungsversorgung (6) und den Lasten (4a, 4b) verschalteten Hierarchiestufen (H1, H2), welche kaskadierend hintereinander geschaltet sind, wobei ein durch die Hierarchiestufen (H1, H2) gebildeter strahlennetzartiger Strompfad (8) mit jeder zusätzlichen Hierarchiestufe (H2) in eine Anzahl von parallelen Teilpfaden (16a, 16b) derart verzweigt ist, dass die lastseitig nächstliegenste Hierarchiestufe (H2) eine der Anzahl der Lasten (4a, 4b) entsprechende Anzahl von Teilpfaden (16a, 16b) zur Verschaltung der Lasten (4a, 4b) aufweist, wobei von jedem Teilpfad (14, 16a, 16b) ein mittels eines jeweiligen Schutzschalters (18a, 18b, 18c) schaltbarer elektrischer Strom (I, Ia, Ib) geführt wird, und wobei ein Wert eines Auslösestroms des jeweiligen Schutzschalters (18a, 18b, 18c) von der Lastseite aus in Richtung der Versorgungsseite sukzessive mit jeder Hierarchiestufe (H1, H2) erhöht wird.

## Beschreibung

Die Erfindung betrifft ein Verfahren zum Betreiben einer Stromverteilungsvorrichtung zum Anschluss einer Anzahl von Lasten an eine gemeinsame Gleichspannungsversorgung. Die Erfindung betrifft weiterhin eine nach einem derartigen Verfahren betreibbare Stromverteilungsvorrichtung.

Stromverteilungsvorrichtungen werden in elektrischen Anlagen häufig zum Anschluss mehrerer elektrischer Lasten oder Verbraucher an ein gemeinsames Versorgungsnetz verwendet. Derartige Stromverteilungsvorrichtungen sind häufig als spezielle Form eines Stromnetzes oder Strompfades ausgeführt, welcher in der Topologie durch eine Vielzahl von Knoten und Maschen bestimmt ist.

Eine typische Ausführung einer solchen Stromverteilungsvorrichtung ist hierbei ein sogenanntes Strahlennetz als Strompfad, welches im Regelfall einen gemeinsamen oder zentralen Einspeisepunkt aufweist und den elektrischen Strom des Versorgungsnetzes über mehrere Verbindungsleitungen (Teilpfade) zu den einzelnen Verbrauchern beziehungsweise Lasten verteilt.

Das Strahlennetz weist hierbei typischerweise eine Anzahl von kaskadierend zwischen dem Versorgungsnetz und den Lasten geschalteten Hierarchiestufen oder Hierarchieebenen auf. Ausgehend von der Versorgungsnetzseite verzweigt der durch die Hierarchiestufen gebildete Strompfad mit jeder zusätzlichen Hierarchiestufe in eine Anzahl von parallelen Teilpfaden, sodass die Hierarchiestufe auf der Lastseite eine der Anzahl der Lasten entsprechende Anzahl von Teilpfaden zur Verschaltung der Lasten aufweist. Die erste, also versorgungsnetzseitige Hierarchiestufe weist hierbei einen Teilpfad auf, welcher einerseits an den Einspeisepunkt und andererseits an einen zu einer Anzahl von Teilpfaden einer zweiten Hierarchiestufe verzweigenden Knotenpunkt gekoppelt ist. Die Hierarchiestufen sind hierbei nacheinander in Reihe geschaltet, wobei die Teilpfade einer jeweiligen Hierarchiestufe jeweils zueinander parallel geschaltet sind. Dadurch wird ein etwa baumartig verzweigter Strompfad zur Versorgung der Lasten gebildet.

Die Teilpfade der Hierarchiestufen weisen in der Regel Schutzschalter zum Schutz der angeschlossenen Lasten auf. Für einen effektiven Betrieb einer derartigen Stromverteilungsvorrichtung ist im Auslöse- oder Fehlerfall der Schutzschalter eine sogenannte Selektivität wichtig. Unter dem Begriff Selektivität ist nachfolgend insbesondere der Fall zu verstehen, dass bei einem (lastseitigen) Fehlerfall in dem Stromkreis von den in Reihe geschalteten Schutzschaltern der Hierarchiestufen lediglich derjenige Schutzschalter des Teilpfades auslöst, welcher sich unmittelbar vor der fehlerhaften Last beziehungsweise vor der Fehlerstelle befindet.

Eine derartige Selektivität gewährleistet somit in einer strahlennetzartig aufgebauten Stromverteilungsvorrichtung, dass trotz eines Fehlers möglichst viele Lasten der elektrischen Anlage in Betrieb bleiben, und dass lediglich derjenige Schutzschalter unmittelbar vor der Fehlerstelle beziehungsweise der fehlerhaften Last auslöst.

Im Falle eines mit einer Gleichspannung beziehungsweise mit einem Gleichstrom gespeisten Versorgungsnetzes (Gleichspannungsversorgung) sind die Schutzschalter zur Absicherung der Lasten in der Regel als elektronische Schutzschalter ausgeführt, da Fehlerströme mittels mechanischer Schutzschalter nicht ohne Weiteres zuverlässig schaltbar sind. Die elektronischen Schutzschalter sind beispielsweise als Halbleiterschalter, insbesondere als IGBTs (insulated gate bipolar transistor), ausgeführt. Hierdurch wird jedoch die gewünschte Selektivität im Betrieb einer strahlennetzartig aufgebauten Stromverteilungsvorrichtung nachteilig beeinflusst.

Zum Betrieb einer Stromverteilungsvorrichtung ist es zum Anschluss einer Anzahl von Lasten an eine gemeinsame Gleichspannungsversorgung denkbar, die Spannung an den IGBTs (Durchlassspannung, Kollektor-Emitter-Spannung) zu erfassen und die erfasste Spannung (den erfassten Spannungswert) mit einem hinterlegten Schwellwert zu vergleichen, wobei der jeweilige IGBT ausgelöst wird, wenn der Schwellwert erreicht wird. Hierbei wird insbesondere das strombegrenzende Verhalten (Entsättigungsverhalten) der IGBTs genutzt. Der von dem Halbleiterschalter geführte elektrische Strom, bei welchem die Durchlassspannung den Schwellwert erreicht, hängt hierbei von dem Nennstrom des Schalters sowie von dessen Ansteuerspannung (Gatespannung) ab.

Ist das Auslösekriterium der Schutzschalter beispielsweise nach deren jeweiligen Nennstrom bemessen, so würde in der Regel bei einem Fehler ein Schutzschalter einer versorgungsseitigen Hierarchiestufe später auslösen als ein Schutzschalter einer lastseitigen Hierarchiestufe, da der Nennstrom des Schutzschalters der versorgungsseitigen Hierarchiestufe höher ist, weil er den Strom aller verzweigten Teilpfade der nachfolgenden Hierarchiestufe(n) führt. Ist jedoch der Nennstrom einer einzelnen (ersten) Last wesentlich größer als der Nennstrom einer unmittelbar benachbarten (zweiten) Last, so besteht zwischen dem Nennstrom des Schutzschalters der ersten Last und dem Nennstrom eines die beiden Lasten versorgenden Schutzschalters der übergeordneten Hierarchiestufe lediglich ein geringer Unterschied, so dass keine Selektivität gegeben ist. Dadurch wird der Einsatz von gleichartigen Schutzschaltern in einer solchen Stromverteilungsvorrichtung bei Anwendungen mit Gleichspannungsversorgungen nachteilig erschwert, wodurch für unterschiedliche Hierarchiestufen beispielsweise unterschiedliche Schutzschalter eingesetzt werden müssen.

Der Erfindung liegt die Aufgabe zugrunde, ein besonders geeignetes Verfahren zum Betreiben einer Stromverteilungsvorrichtung zum Anschluss einer Anzahl von Lasten an eine Gleichspannungsversorgung anzugeben. Insbesondere soll eine möglichst hohe Selektivität bei einem Fehlerfall realisiert werden. Der Erfindung liegt weiterhin die Aufgabe zugrunde, eine nach einem derartigen Verfahren betreibbare oder betriebene Stromverteilungsvorrichtung anzugeben.

Hinsichtlich des Verfahrens wird die Aufgabe mit den Merkmalen des Anspruchs 1 und hinsichtlich der Stromverteilungsvorrichtung mit den Merkmalen des Anspruchs 11 erfindungsgemäß gelöst. Vorteilhafte Ausgestaltungen und Weiterbildungen sind Gegenstand der jeweiligen Unteransprüche.

Das erfindungsgemäße Verfahren ist zum Betreiben einer Stromverteilungsvorrichtung zum Anschluss einer Anzahl von Lasten an eine Gleichspannungsversorgung geeignet und ausgestaltet. Zwischen der Gleichspannungsversorgung und den Lasten (Verbraucher) ist eine Anzahl von kaskadierend hintereinander geschalteten Hierarchiestufen verschaltet. Die Hierarchiestufen sind hierbei insbesondere zueinander in Reihe zwischen einem zentralen oder gemeinsamen Einspeisepunkt der Gleichspannungsversorgung (Versorgungsseite) und den Lasten (Lastseite) geschaltet.

Im Verschaltungszustand bilden die Hierarchiestufen einen strahlennetzartigen Strompfad zu Verteilung des elektrischen (Gleich-)Stroms der Gleichspannungsversorgung auf die einzelnen Lasten. Der Strompfad verzweigt hierbei mit jeder zusätzlichen Hierarchiestufe in eine Anzahl von parallelen Teilpfaden. Die baumartige Verzweigung erfolgt hierbei derart, dass die lastseitig nächstliegenste Hierarchiestufe eine der Anzahl der Lasten entsprechende Anzahl von Teilpfaden (Abzweig, Stromzweig) zur Verschaltung der Lasten aufweist. Mit anderen Worten sind die Teilpfade einer Hierarchiestufe zueinander parallel geschaltet.

Geeigneterweise ist in jedem der Teilpfade des Strompfades ein jeweiliger Schutzschalter verschaltet. Mit dem insbesondere als elektronischen Schutzschalter, vorzugsweise als (Leistungs-)Halbleiterschalter, ausgeführten Schutzschalter ist der in den Teilpfaden geführte elektrische (Teil-)Strom insbesondere gesteuert schaltbar. Die Schutzschalter dienen zur Absicherung der angeschlossenen Lasten im Falle eines nachfolgend auch als Fehlerstrom bezeichneten Überstroms, also eines elektrischen Stromes mit einem derart hohen Stromwert, dass eine Schädigung einer oder jeder Last im Falle einer dauerhaften Belastung auftreten würde.

Die Schutzschalter lösen hierbei aus beziehungsweise öffnen den jeweiligen Teilpfad, wenn der geführte Strom zu einer Durchlassspannung (Kollektor-Emitter-Spannung) führt, welche einen jeweiligen Schwellwert erreicht oder überschreitet. Der Strom, der zu einer Überschreitung dieses Schwellwerts führt, ist nachfolgend auch als Auslösestrom bezeichnet. Der Auslösestrom beziehungsweise der Schwellwert ist für die unterschiedlichen Hierarchiestufen vorzugsweise unterschiedlich bemessen. Verfahrensgemäß ist hierbei vorgesehen, dass der Wert des Auslösestroms des jeweiligen Schutzschalters von der Lastseite aus in Richtung der Versorgungsseite sukzessive mit jeder Hierarchiestufe erhöht wird.

Dadurch ist ein besonders geeignetes Verfahren zum Betreiben einer Stromverteilungsvorrichtung realisiert. Insbesondere ist somit in einfacher Art und Weise eine möglichst hohe Selektivität bei einem Fehlerfall ermöglicht. Insbesondere lösen somit Schutzschalter lastseitiger Hierarchiestufen oder Teilpfade bei einem geringeren Auslösestrom aus, als diejenigen Schutzschalter der Versorgungsseite. Dadurch ist eine besonders zweckmäßige Stromselektivität realisiert, sodass gewährleistet ist, dass insbesondere lediglich derjenige Schutzschalter auslöst, welcher sich im Strompfad unmittelbar vor einer Fehlerstelle oder fehlerhaften Last befindet. Dadurch wird sichergestellt, dass trotz eines Fehlers möglichst viele Lasten in Betrieb bleiben, was sich insbesondere bei Anwendungen in elektrischen Anlagen oder Maschinen vorteilhaft auf deren Betrieb überträgt.

In einer geeigneten Weiterbildung wird der Wert des Auslösestroms anhand einer jeweiligen Ansteuerspannung des zugeordneten Schutzschalters eingestellt. Bevorzugterweise sind die Schutzschalter unterschiedlicher Hierarchiestufen hierbei als gleichartige IGBTs ausgeführt, welche jeweils mittels einer Gatespannung als Ansteuerspannung steuerbar sind. Dadurch ist aufgrund des Entsättigungsverhaltens derartiger IGBTs auf technisch einfache Art und Weise eine geeignete Einstellung des jeweiligen Auslösestroms ermöglicht.

Dies bedeutet, dass im Betrieb der Schutzschalter somit nicht lediglich der jeweilige Nennstrom in einem Schutzschalter die Höhe der jeweiligen Ansteuerspannung bestimmt. Im Gegensatz zum Stand der Technik wird somit vielmehr zusätzlich die Hierarchieebene, also die Position der jeweiligen Hierarchiestufe im Strompfad, zur Einstellung des Auslösestroms berücksichtigt.

In einer möglichen Weiterbildungsform wird pro Hierarchieebene, also mit jeder zusätzlichen Hierarchiestufe oder Verzweigung des Strompfades, die Ansteuerspannung um einen bestimmten Spannungswert erhöht beziehungsweise angehoben. Sind beispielsweise die Nennströme zweier Schutzschalter von zwei in Reihe geschalteten Teilpfaden aufeinanderfolgender Hierarchiestufen identisch, wird der Schutzschalter im lastseitigen Teilpfad mit einer niedrigeren Ansteuerspannung, beispielsweise 15 V (Volt), angesteuert und der Schutzschalter im versorgungsseitigen Teilpfad mit einer gegenüber dieser erhöhten Ansteuerspannung, beispielsweise 15,5 V. Somit entsättigt der lastseitige Schutzschalter bei einem Fehler früher, als der versorgungsseitige Schutzschalter. Dadurch löst der versorgungsseitige Schutzschalter nicht aus, wodurch die dem lastseitigen Teilpfad parallel geschalteten Teilpfade der jeweiligen Hierarchiestufe weiter betrieben werden.

Jeder Schutzschalter ist bevorzugt als eine antiserielle Schaltung zweier Halbleiterschalter, beispielsweise in Form von zwei IGBTs mit jeweils antiparallel geschalteter Freilaufdiode, ausgeführt, wobei ein Halbleiterschalter den Strom in Richtung der Last und der zweite Halbleiterschalter den Strom in Richtung des Versorgungsnetzes führt. In einer zweckmäßigen Weiterbildungsform wird erfindungsgemäß die Ansteuerspannung an dem Halbleiterschalter des Schutzschalters, welcher den Strom in Richtung der Last führt, niedriger eingestellt (zum Beispiel auf 14,5 V) als die Ansteuerspannung des zweiten Halbleiterschalters des Schutzschalters, welcher den Strom in Richtung des Versorgungsnetzes führt (zum Beispiel auf 15 V). Dadurch wird erreicht, dass bei einem Fehler, bei welchem beispielsweise auch nicht-fehlerhafte, benachbarte kapazitive Lasten, wie etwa ein Zwischenkreiskondensator, zum Fehlerstrom beitragen, lediglich der Schutzschalter unmittelbar vor der Fehlerstelle auslöst, und nicht die hierzu benachbarten Schutzschalter an der kapazitiven Last.

In einer vorteilhaften Ausgestaltung wird die oder jede Ansteuerspannung anhand eines von dem jeweiligen Schutzschalter geführten Ist-Stroms eingestellt. Mit anderen Worten wird die Selektivität im Fehlerfall dadurch erreicht, dass die Ansteuerspannung an den Schutzschaltern abhängig davon eingestellt wird, wie hoch der betriebsmäßig geführte Strom in dem jeweiligen Schutzschalter zum jeweiligen Zeitpunkt ist (Ist-Strom).

In einer geeigneten Ausgestaltungsform wird die Ansteuerspannung der Schutzschalter derart geregelt, dass eine jeweilige Durchlassspannung, also die Kollektor-Emitter-Spannung im Falle eines IGBTs als Schutzschalter, einen festen Sollwert annimmt. Die Regelung erfolgt hierbei vorzugsweise auf einer Zeitskala, welche im Vergleich zu einer Anstiegsgeschwindigkeit eines Kurzschlussstroms langsamer ist, das bedeutet beispielsweise mit einer Nachstellzeit von mehr als 10 µs, insbesondere mehr als 100 µs.

In einer alternativen Ausgestaltung wird die oder jede Ansteuerspannung anhand eines für den jeweiligen Schutzschalter gewünschten Sollwertes für eine Durchlassspannung eingestellt. Dadurch ist eine geeignete Selektivität der Stromverteilungsvorrichtung im Fehlerfall ermöglicht.

In einer denkbaren Ausgestaltungsform wird hierbei die Ansteuerspannung erhöht, wenn die jeweilige Durchlassspannung den Sollwert überschreitet. Des Weiteren wird die Ansteuerspannung reduziert, wenn die Durchlassspannung den Sollwert unterschreitet.

In einer geeigneten Ausgestaltungsform wird die oder jede Ansteuerspannung auf einen jeweiligen Minimalwert eingestellt oder begrenzt, wenn die Durchlassspannung den Sollwert unterschreitet oder nicht erreicht. Dadurch wird ein sicherer Betrieb der Stromverteilungsvorrichtung auch in einem stromlosen Zustand eines Teilpfads gewährleistet.

Weiterhin wird die oder jede Ansteuerspannung zusätzlich oder alternativ auf einen jeweiligen Maximalwert begrenzt, wenn die Durchlassspannung den Sollwert erreicht oder überschreitet. Mit anderen Worten wird ein Maximalwert vorgegeben, welcher auch bei einem Überschreiten der Durchlassspannung über den Sollwert nicht überschritten wird. Dadurch wird eine Begrenzung des Fehlerstroms auf einen definierten Wert realisiert.

In einer möglichen Ausbildung wird die oder jede Durchlassspannung mit einem hinterlegten Schwellwert verglichen. Der Schwellwert ist hierbei beispielsweise derjenige Spannungswert, welcher bei einem maximal zulässigen (Betriebs-)Strom bei einer maximalen Ansteuerspannung erwartet wird.

In einer denkbaren Weiterbildung wird die oder jede Ansteuerspannung anhand einer hinterlegten Kennlinie reduziert, wenn die Durchlassspannung den Schwellwert erreicht oder überschreitet. Insbesondere wird hierbei in einer zweckmäßigen Ausgestaltung der Verlauf der oder jeder Kennlinie für unterschiedliche Hierarchiestufen variiert. Bevorzugterweise weisen die Kennlinien für lastseitige Hierarchiestufen einen schnelleren Spannungsabfall als für versorgungsseitige Hierarchiestufen auf.

Mit anderen Worten weisen die Kennlinien einen stärker abfallenden Verlauf für Hierarchiestufen an der Lastseite im Vergleich zu Hierarchiestufen an der Versorgungsseite auf. Der Endpunkt einer Kennlinie bei einer maximalen Durchlassspannung liegt hierbei, abhängig von der Hierarchiestufe, vorzugsweise oberhalb, beispielsweise 2 V oberhalb, einer Thresholdspannung des jeweiligen Schutzschalters oder IGBTs, beispielsweise 6 V. Dadurch ist ein zweckmäßiges Abschaltverhalten in Abhängigkeit von der Hierarchiestufe hinsichtlich der jeweiligen Auslöseströme und Kurzschlussströme realisiert.

Ein zusätzlicher oder alternativer Aspekt des Verfahrens sieht vor, dass jede Hierarchiestufe einen unterschiedlichen Schwellwert aufweist, wobei der Wert des jeweiligen Schwellwerts in Richtung der Lasten mit jeder nachfolgenden Hierarchiestufe erhöht wird. Insbesondere ist in einer vorteilhaften Ausführungsform vorgesehen, dass die Differenz zwischen dem Sollwert und dem Schwellwert für jede Hierarchiestufe im Wesentlichen identisch vorgegeben ist. Mit anderen Worten weist der Schwellwert der versorgungsseitigen Hierarchiestufen einen im Vergleich zu dem Schwellwert der lastseitigen Hierarchiestufen erniedrigten Wert auf.

Alternativ ist es ebenso denkbar, dass der Schwellwert für jede Hierarchiestufe des Strompfades gleich dimensioniert wird.

In einer denkbaren Ausführung wird eine oder jede Auslösezeit der Schutzschalter anhand der jeweiligen Ansteuerspannung dimensioniert. Dadurch ist zusätzlich zu der Stromselektivität eine Zeitselektivität der Stromverteilungsvorrichtung realisiert. Die Auslösezeit ist die Zeitdauer für eine eigenständige Abschaltung, also für das Auslösen, des Schutzschalters bei einem Fehler- oder Kurzschlussstrom.

Hierzu wird geeigneterweise für jeden Schutzschalter ein Zeitwert beispielsweise in einer Tabelle hinterlegt, welcher bestimmt, für welche Zeitdauer der Schutzschalter in Abhängigkeit seiner jeweiligen Ansteuerspannung in der Lage ist, den Fehler- oder Kurzschlussstrom zu führen. Die Auslösezeit des Schutzschalters ist hierbei geeigneterweise an dieser jeweiligen Zeitdauer bemessen. Beispielsweise erfolgt die Abschaltung des Schutzschalters nach einem bestimmten Prozentsatz, wie zum Beispiel 80%, dieser Zeitdauer. Dadurch wird erreicht, dass die Kurzschlussdauer beziehungsweise Auslösezeit in der Regel länger ist, als im Stand der Technik üblich.

Durch die somit verlängerte Auslösezeit wird beispielsweise für ein den Schutzschaltern übergeordneten Controller (Steuergerät) eine ausreichende Zeit zur Verfügung gestellt, um auf Basis der von allen Schutzschaltern gelieferten Rückmeldesignalen einen Entsättigungszustand am Fehlerort beziehungsweise die Fehlerstelle zu ermitteln und gezielt lediglich den unmittelbar davor befindlichen Schutzschalter zu öffnen. Somit wird gezielt lediglich derjenige Schutzschalter geöffnet, welcher für die Beherrschung des Fehlers geöffnet werden muss.

Die erfindungsgemäße Stromverteilungsvorrichtung ist zur Durchführung des vorstehend beschriebenen Verfahrens geeignet und eingerichtet. Hierzu umfasst die Stromverteilungsvorrichtung eine Anzahl von steuerbaren Schutzschaltern in Teilpfaden eines strahlennetzartigen Strompfades.

Die Stromverteilungsvorrichtung weist vorzugsweise einen Controller (das heißt ein Steuergerät) auf, mittels welchen die einzelnen Schutzschalter angesteuert werden. Zusätzlich oder alternativ ist jeder Schutzschalter mit einem integrierten Controller ausgeführt.

Der Controller ist hierbei allgemein - programm- und/oder schaltungstechnisch - zur Durchführung des vorstehend beschriebenen erfindungsgemäßen Verfahrens eingerichtet. Der Controller ist somit insbesondere dazu eingerichtet, den Auslösestrom der Schutzschalter in Abhängigkeit der jeweiligen Hierarchiestufen einzustellen.

Die Controller sind zumindest im Kern durch jeweils einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Benutzer - bei Ausführung der Betriebssoftware in dem Mikrocontroller automatisch durchgeführt wird.

Die Controller sind in einer möglichen Ausführungsform im Rahmen der Erfindung alternativ aber auch durch programmierbare elektronische Bauteile, zum Beispiel einen anwendungsspezifischen integrierten Schaltkreis (ASIC) gebildet, in dem die Funktionalität zur Durchführung des erfindungsgemäßen Verfahrens mit schaltungstechnischen Mitteln implementiert ist.

Nachfolgen sind Ausführungsbeispiele der Erfindung anhand einer Zeichnung näher erläutert. Darin zeigen in vereinfachten und schematischen Darstellungen:
- FIG 1: ausschnittsweise in Blockdarstellung eine Stromverteilungsvorrichtung,
- FIG 2: ein Ausgangskennlinienfeld eines IGBTs,
- FIG 3: ein Durchlassspannung-Ansteuerspannung-Diagramm mit zwei Kennlinien zur Absenkung der Ansteuerspannung bei einem Fehlerfall der Stromverteilungsvorrichtung.

Einander entsprechende Teile und Größen sind in allen Figuren stets mit den gleichen Bezugszeichen versehen.

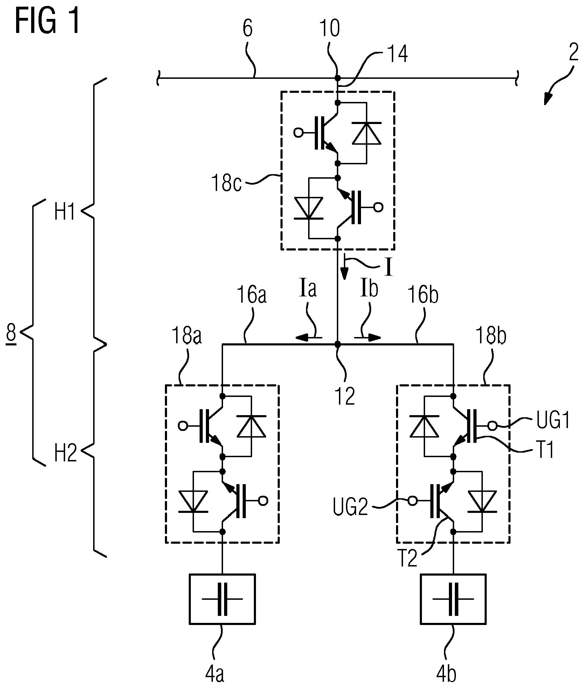

Die FIG 1 zeigt eine Stromverteilungsvorrichtung 2 zum Anschluss zweier Lasten oder Verbraucher 4a und 4b an einem gemeinsamen Gleichspannungsnetz beziehungsweise einer Gleichspannungsversorgung 6. Mittels der Stromverteilungsvorrichtung 2 wird ein elektrischer (Gleich-)Strom I der Gleichspannungsversorgung 6 auf die beiden angeschlossenen Lasten 4a und 4b verteilt.

In dem in FIG 1 dargestellten Ausführungsbeispiel weisen die angeschlossenen Lasten 4a und 4b jeweils kapazitive Bauteile wie beispielsweise einen jeweiligen Zwischenkreiskondensator auf.

Die Stromverteilungsvorrichtung 2 weist einen Strompfad 8 auf, welcher zwischen einem gemeinsamen oder zentralen Einspeisepunkt 10 der Gleichspannungsversorgung 6 und den Lasten 4a und 4b verschaltet ist. Der baumartig verzweigte Strompfad 8 weist hierbei zwei Hierarchiestufen H1 und H2 auf, welche kaskadierend hintereinander in Reihe geschaltet sind. Die Hierarchiestufe H1 ist auf der Versorgungsseite angeordnet und somit zwischen dem Einspeisepunkt 10 und einem Knotenpunkt 12 verschaltet. Die auf der Versorgungsseite gegenüberliegend angeordnete, lastseitige, Hierarchiestufe H2 ist einerseits mit dem Knotenpunkt 12 und andererseits mit den Lasten 4a und 4b verschaltet.

In dem in FIG 1 dargestellten Verschaltungszustand der Stromverteilungsvorrichtung 2 bilden die Hierarchiestufen H1 und H2 den strahlennetzartigen Strompfad 8 zu Verteilung des Stroms I der Gleichspannungsversorgung 6 auf die einzelnen Lasten 4a und 4b. Die Hierarchiestufe H1 weist hierbei einen Teilpfad 14 als Teil beziehungsweise Abschnitt des Strompfads 8 auf. An dem Knotenpunkt 12 verzweigt der Strompfad 8 bei der zweiten Hierarchiestufe H2 in zwei parallele Teilpfade 16a und 16b, welche an die Lasten 4a beziehungsweise 4b geführt sind. An dem Knotenpunkt 12 wird somit der (Gesamt-)Strom I in einen zur Last 4a geführten (Teil-)Strom Ia und in einen zur Last 4b geführten (Teil-)Strom Ib geteilt.

Die Stromverteilungsvorrichtung 2 weist drei elektronische Schutzschalter 18a, 18b und 18c auf, welche in den Hierarchiestufen H1 und H2 zur Absicherung der Lasten 4a und 4b bei einem Fehlerstrom verschaltet sind. In dem Teilpfad 14 der Hierarchiestufe H1 ist der Schutzschalter 18c verschaltet. Der Teilpfad 16a weist hierbei den Schutzschalter 18a und der Teilpfad 16b entsprechend den Schutzschalter 18b auf. Die Schutzschalter 18a, 18b, 18c sind hierbei vorzugsweise baugleich ausgeführt und weisen jeweils zwei gegensinnig zueinander in Reihe geschaltete Halbleiterschalter T1 und T2, insbesondere in Form zweier baugleicher IGBTs, auf. Beispielhaft sind in der FIG 1 lediglich die Halbleiterschalter T1, T2 des Schutzschalters 18b mit Bezugszeichen versehen.

Die Halbleiterschalter T1, T2 der Schutzschalter 18a, 18b und 18c sind über ihren jeweiligen Gateanschluss (Steuereingang) mittels einer jeweiligen Gatespannung beziehungsweise Ansteuerspannung UG1 beziehungsweise UG2 gesteuert.

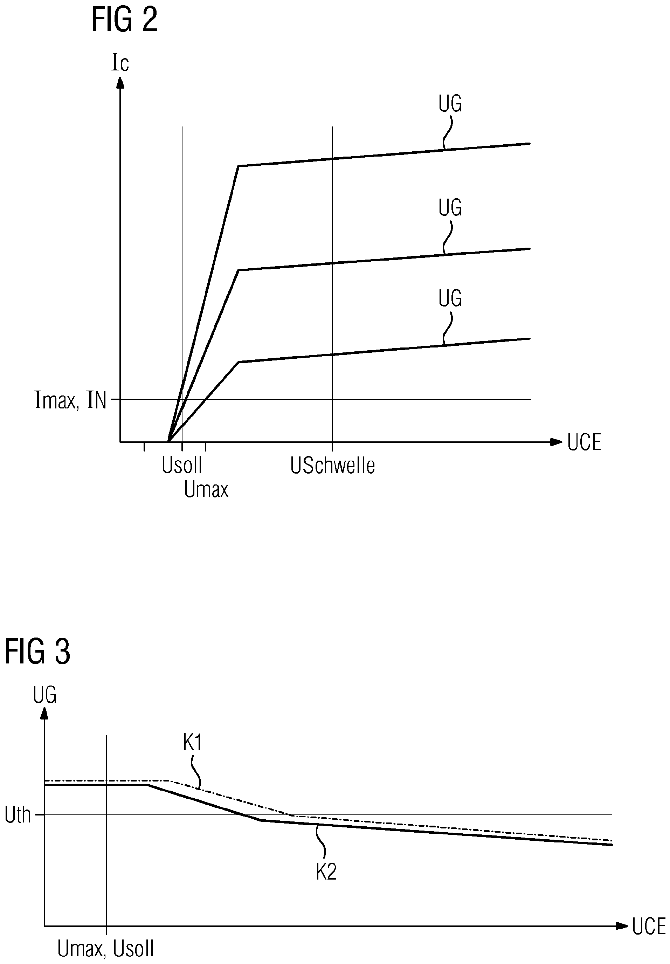

Die Ansteuerspannungen UG1, UG2 der Halbleiterschalter T1, T2 der Schutzschalter 18a, 18b, 18c werden im Betrieb der Stromverteilungsvorrichtung 2 derart eingestellt, dass eine selektive Abschaltung oder Auslösung der Schutzschalter 18a, 18b, 18c im Fehlerfall ermöglicht ist. Insbesondere weisen in einer möglichen Ausführungsform die IGBTs T1, T2 eines einzelnen Schutzschalters 18a, 18b, 18c vorzugsweise jeweils einen im Wesentlichen identischen Spannungswert der Ansteuerspannung UG auf. Hierbei wird das in FIG 2 schematisch dargestellte Entsättigungsverhalten der IGBTs T1, T2 genutzt.

Die FIG 2 zeigt in vereinfachter Darstellung ein beispielhaftes Ausgangskennlinienfeld der IGBTs T1, T2, also den ersten Quadranten eines entsprechenden Transistorkennlinienfeldes. Entlang der horizontalen Abszissenachse (x-Achse) ist eine Kollektor-Emitter-Spannung beziehungsweise Durchlassspannung UCE aufgetragen. Entlang der vertikalen Ordinatenachse (y-Achse) ist ein vom IGBT T1, T2 geführter Laststrom beziehungsweise Kollektorstrom IC aufgetragen. Der Kollektorstrom IC entspricht im Wesentlichen dem geführten Ist-Strom des jeweiligen Schutzschalters 18a, 18b, 18c. Im Falle des Schutzschalters 18c entspricht der Kollektorstrom IC hierbei dem Strom I und im Falle der Schutzschalter 18a und 18b den Strömen Ia beziehungsweise Ib.

Ein Nennstrom IN der IGBTs T1 beziehungsweise T2 ist als parallel zur Abszissenachse gerichtete Linie dargestellt. Eine im Betrieb gewünschte Sollspannung USoll ist als vertikal gerichtete Linie gezeigt. Parallel hierzu ist eine Linie als eine Schwellwertspannung beziehungsweise als ein (Spannungs-)Schwellwert USchwelle dargestellt.

Wie in der FIG 2 vergleichsweise deutlich ersichtlich wird, hängt ein Strom, bei welchem die Durchlassspannung UCE den Schwellwert USchwelle erreicht, von dem Nennstrom IN des Schutzschalters 18a, 18b, 18c sowie von der Ansteuerspannung UG der IGBTs T1 und T2 ab.

Zur Gewährleistung einer möglichst hohen Selektivität im Fehlerfall wird die Stromverteilungsvorrichtung 2 mit einem erfindungsgemäßen Verfahren betrieben. Verfahrensgemäß ist hierbei vorgesehen, dass ein Wert eines Auslösestroms des jeweiligen Schutzschalters 18a, 18b, 18c, also der Wert des geführten Stroms, bei welchem der Schutzschalter 18a, 18b, 18c auslöst beziehungsweise die IGBTs T1, T2 geöffnet werden, von der Lastseite aus in Richtung der Versorgungsseite sukzessive mit jeder Hierarchiestufe H1 und H2 erhöht. Dies bedeutet, dass der Schutzschalter 18c der versorgungsseitigen Hierarchiestufe H1 einen höheren Auslösestrom aufweist als die Schutzschalter 18a und 18b der lastseitigen Hierarchiestufe H2. Hierzu werden insbesondere die Ansteuerspannungen UG zum Betrieb der IGBTs T1, T2 für den Schutzschalter 18c und die Schutzschalter 18a und 18b unterschiedlich eingestellt, sodass die Schutzschalter 18a und 18b bei einem geringeren Stromwert auslösen als der Schutzschalter 18c.

Zu diesem Zwecke wird die jeweilige Ansteuerspannung UG in Abhängigkeit des jeweiligen Nennstroms IN sowie der Hierarchiestufe H1 und H2 eingestellt.

In einem möglichen Ausführungsbeispiel des Verfahrens sind die Nennströme IN der Schutzschalter 18c und 18a im Wesentlichen identisch. Hierbei werden die IGBTs T1, T2 der Schutzschalter 18a und 18b mit einer Ansteuerspannung UG von 15 V angesteuert. Die Ansteuerspannung UG der IGBTs T1, T2 des Schutzschalters 18c weist einen gegenüber diesen erhöhten Spannungswert von beispielsweise 15,5 V auf. Tritt in dieser Ausführungsform beispielsweise ein Fehler an der Last 4a auf, so entsättigen die IGBTs T1, T2 des Schutzschalters 18a aufgrund der niedrigeren Ansteuerspannung UG früher als die IGBTs T1, T2 des Schutzschalters 18c. Dadurch wird bei einem derartigen Fehlerfall der Schutzschalter 18a ausgelöst, wodurch die durch den Schutzschalter 18b gesicherte Last 4b weiterhin betrieben wird.

In einem alternativen Ausführungsbeispiel des Verfahrens wird die Selektivität dadurch erreicht, dass die Ansteuerspannung UG der Schutzschalter 18a, 18b, 18c in Abhängigkeit des jeweilig betriebsmäßig geführten Ist-Stroms IC eingestellt wird. Insbesondere wird die Ansteuerspannung UG hierbei jeweils derart eingestellt, dass die jeweilige Durchlassspannung UCE auf die Sollspannung USoll geregelt wird. Die Regelung erfolgt hierbei geeigneterweise auf einer Zeitskala, welche im Vergleich zu einer Anstiegsgeschwindigkeit eines Kurzschlussstroms langsam ist. In einer bevorzugten Ausführungsform wird dabei die Sollspannung USoll für die lastseitigen Schutzschalter 18a und 18b höher gewählt als für den versorgungsseitigen Schutzschalter 18c.

In einer zweiten Ausführungsform wird die Ansteuerspannung UG2 der IGBTs T2 der jeweiligen Schutzschalter 18a, 18b, 18c auf einen höheren Spannungswert eingestellt, als die Ansteuerspannung UG1 der zugehörigen IGBTs T1. Dies bewirkt, dass bei einem Fehler beispielsweise in der Last 4a, bei welchem auch der Zwischenkreiskondensator der Last 4b auf die Fehlerstelle speist, der Schutzschalter 18a früher auslöst als der Schutzschalter 18b.

Anhand der FIG 3 wird nachfolgend ein weiteres Ausführungsbeispiel zur Gewährleistung einer möglichst hohen Selektivität im Betrieb der Stromverteilungsvorrichtung 2 näher erläutert.

Die FIG 3 zeigt in schematischer und vereinfachter Darstellung ein Durchlassspannung-Ansteuerspannung-Diagramm (UCE-UG-Diagramm). Die horizontale Abszissenachse (x-Achse) bezeichnet hierbei die Durchlassspannung UCE der IGBTs T1, T2. Entlang der vertikalen Ordinatenachse (y-Achse) ist die Ansteuerspannung UG der IGBTs T1, T2 aufgetragen. Eine im Betrieb bei einem Maximalstrom Imax auftretende Nennspannung Umax ist als vertikal gerichtete Linie gezeigt. Die nachfolgend auch als Maximalspannung bezeichnete Nennspannung Umax weist hierbei einen größeren Spannungswert auf als die Sollspannung USoll, und entspricht im Wesentlichen derjenigen Durchlassspannung, welche bei maximal zulässiger Ansteuerspannung und maximal zulässigen Betriebsstrom Imax austritt.

Die Selektivität wird in diesem Ausführungsbeispiel des Verfahrens dadurch erreicht, dass die Ansteuerspannung UG der Schutzschalter 18a, 18b, 18c in Abhängigkeit deren jeweiliger Durchlassspannung UCE eingestellt wird, solange die Durchlassspannung einen geringeren Spannungswert als die Maximalspannung Umax aufweist. Wenn die Durchlassspannung UCE größer als ein bei einem maximalen Betriebsstrom erwarteter Spannungswert (Umax) wird, wird die jeweilige Ansteuerspannung UG der betroffenen IGBTs T1, T2 nach einer hinterlegten Kennlinie reduziert. Die Maximalspannung Umax beschreibt somit einen Schwellwert. Hierbei sind vorzugsweise für jede der Hierarchiestufen H1 und H2 unterschiedliche Kennlinien K1 und K2 vorgesehen.

Die Ansteuerspannung UG der IGBTs T1 und T2 der lastseitige Hierarchiestufe H2 werden hierbei anhand der Kennlinie K2 eingestellt und die Ansteuerspannung UG der IGBTs T1 und T2 der versorgungsseitigen Hierarchiestufe H1 mittels der Kennlinie K1. Die Kennlinie K2 weist hierbei einen schneller abfallenden Verlauf im Vergleich zur Kennlinie K1 auf. Der Endpunkt der Kennlinien K1 und K2 bei einer maximalen Durchlassspannung UCE liegt hierbei vorzugsweise oberhalb, beispielsweise 2 V, einer Thresholdspannung Uth der IGBTs T1, T2, beispielsweise 6 V.

In einem Ausführungsbeispiel des Verfahrens weisen der Schutzschalter 18c der Hierarchiestufe H1 und die Schutzschalter 18a und 18b der Hierarchiestufe H2 beispielsweise unterschiedliche Sollspannungen USoll auf. Vorzugsweise ist der Wert der Sollspannung USoll hierbei für den Schutzschalter 18c der versorgungsseitigen Hierarchiestufe H1 kleiner als der Wert der Sollspannung USoll der Schutzschalter 18a und 18b der lastseitigen Hierarchiestufe H2.

In einem alternativen Ausführungsbeispiel des Verfahrens werden die Ansteuerspannungen UG der IGBTs T1, T2 auf einen jeweiligen Minimalwert eingestellt, wenn die Durchlassspannung UCE die Sollspannung USoll nicht erreicht. Dadurch wird ein sicherer Betrieb der Stromverteilungsvorrichtung 2 auch in einem stromlosen Zustand eines Teilpfads 14, 16a, 16b gewährleistet.

Weiterhin werden die Ansteuerspannungen UG der IGBTs T1, T2 auf einen jeweiligen Maximalwert begrenzt, wenn die Durchlassspannung UCE die Sollspannung USoll überschreitet. Mit anderen Worten wird ein Maximalwert für die Ansteuerspannung vorgegeben, welcher auch bei einem Überschreiten der Durchlassspannung UCE über den Sollwert USoll nicht überschritten wird. Dadurch wird im Falle eines Auftretenden Fehlers einer Last 4a, 4b eine Begrenzung des Fehlerstroms auf einen definierten Wert realisiert.

In einem weiteren Ausführungsbeispiel des Verfahrens werden die Auslösezeiten der Schutzschalter 18a, 18b, 18c anhand der jeweiligen Ansteuerspannung UG dimensioniert. Hierzu wird in einem nicht näher dargestellten Controller als Steuergerät oder Ansteuerung der IGBTs T1, T2 hinterlegt, welche Zeitdauer die IGBTs T1, T2 in Abhängigkeit der Ansteuerspannung UG in der Lage sind, einen Fehlerstrom zu führen. In einer denkbaren Ausführungsform wird diese Zeitdauer bei niedrigen Ansteuerspannungen UG erhöht. Die Auslösung des jeweiligen Schutzschalters 18a, 18b, 18c beziehungsweise die eigenständige Abschaltung deren IGBTs T1, T2 erfolgt hierbei erst, nachdem ein bestimmter Prozentsatz dieser Zeitdauer, beispielsweise 80%, nach einem Erreichen oder Überschreiten des Schwellwertes USchwelle durch die Durchlassspannung UCE verstrichen ist.

Durch dieses Ausführungsbeispiel wird erreicht, dass eine Kurzschlussdauer der Schutzschalter 18a, 18b, 18c länger als etwa 10 µs (Mikrosekunden) bei typischen Schutzschaltern erreicht wird, beispielsweise 30 µs. Dadurch wird dem Controller genug Zeit zur Verfügung gestellt, um anhand von Rückmeldungssignalen der IGBTs T1, T2 mittels deren Entsättigungszustands die Fehlerstelle im Strompfad 8 zu ermitteln, und gezielt lediglich denjenigen Schutzschalter 18a, 18b, 18c zu öffnen, welcher für die sichere Beherrschung des Fehlers notwendig ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

Insbesondere ist es möglich, die Stromverteilungsvorrichtung 2 mit mehreren gestaffelten oder kaskadierenden Hierarchiestufen auszuführen, wobei die Verzweigung beziehungsweise die jeweilige Anzahl an parallelen Teilpfaden unterschiedlich sein kann.

## Patentansprüche

1. Verfahren zum Betreiben einer Stromverteilungsvorrichtung (2) zum Anschluss einer Anzahl von Lasten (4a, 4b) an eine Gleichspannungsversorgung (6), mit einer Anzahl von zwischen der Gleichspannungsversorgung (6) und den Lasten (4a, 4b) verschalteten Hierarchiestufen (H1, H2), welche kaskadierend hintereinander geschaltet sind,
- wobei ein durch die Hierarchiestufen (H1, H2) gebildeter strahlennetzartiger Strompfad (8) mit jeder zusätzlichen Hierarchiestufe (H2) in eine Anzahl von parallelen Teilpfaden (16a, 16b) derart verzweigt ist, dass die lastseitig nächstliegenste Hierarchiestufe (H2) eine der Anzahl der Lasten (4a, 4b) entsprechende Anzahl von Teilpfaden (16a, 16b) zur Verschaltung der Lasten (4a, 4b) aufweist,
- wobei von jedem Teilpfad (14, 16a, 16b) ein mittels eines jeweiligen Schutzschalters (18a, 18b, 18c) schaltbarer elektrischer Strom (I, Ia, Ib) geführt wird, und
- wobei ein Wert eines Auslösestroms des jeweiligen Schutzschalters (18a, 18b, 18c) von der Lastseite aus in Richtung der Versorgungsseite sukzessive mit jeder Hierarchiestufe (H1, H2) erhöht wird.

2. Verfahren nach Anspruch 1,
**dadurch gekennzeichnet, dass** der Wert des Auslösestroms mittels einer jeweiligen Ansteuerspannung (UG) der Schutzschalter (18a, 18b, 18c) eingestellt wird.

3. Verfahren nach Anspruch 2,
**dadurch gekennzeichnet, dass** die oder jede Ansteuerspannung (UG) anhand eines vom jeweiligen Schutzschalter (18a, 18b, 18c) geführten Ist-Stroms (IC) eingestellt wird.

4. Verfahren nach Anspruch 2,
**dadurch gekennzeichnet, dass** die oder jede Ansteuerspannung (UG) anhand eines Sollwerts (USoll) für eine Durchlassspannung (UCE) des jeweiligen Schutzschalters (18a, 18b, 18c) eingestellt wird.

5. Verfahren nach Anspruch 4,
**dadurch gekennzeichnet,**
- **dass** die oder jede Ansteuerspannung (UG) auf einen jeweiligen Minimalwert begrenzt wird, wenn die Durchlassspannung (UCE) den Sollwert (USoll) unterschreitet, und/oder
- **dass** die oder jede Ansteuerspannung (UG) auf einen jeweiligen Maximalwert begrenzt wird, wenn die Durchlassspannung (UCE) den Sollwert (USoll) erreicht oder überschreitet.

6. Verfahren nach Anspruch 4 oder 5,
**dadurch gekennzeichnet, dass** die oder jede Durchlassspannung (UCE) mit einem hinterlegten Schwellwert (USchwelle, Umax) verglichen wird.

7. Verfahren nach Anspruch 6,
**dadurch gekennzeichnet, dass** die oder jede Ansteuerspannung (UG) anhand einer hinterlegten Kennlinie (K1, K2) reduziert wird, wenn die Durchlassspannung (UCE) den Schwellwert (Umax) erreicht oder überschreitet.

8. Verfahren nach Anspruch 7,
**dadurch gekennzeichnet, dass** ein Verlauf der oder jeder Kennlinie (K1, K2) für unterschiedliche Hierarchiestufen (H1, H2) variiert wird.

9. Verfahren nach einem der Ansprüche 6 bis 8,
**dadurch gekennzeichnet, dass** jede Hierarchiestufe (H1, H2) einen unterschiedlichen Schwellwert (USchwelle, Umax) aufweist, wobei der Wert des jeweiligen Schwellwerts (USchwelle, Umax) in Richtung der Lasten (4a, 4b) mit jeder nachfolgenden Hierarchiestufe (H1, H2) erhöht wird.

10. Verfahren nach einem der Ansprüche 2 bis 9,
**dadurch gekennzeichnet, dass** eine oder jede Auslösezeit der Schutzschalter (18a, 18b, 18c) anhand der jeweiligen Ansteuerspannung (UG) dimensioniert wird.

11. Stromverteilungsvorrichtung (2)zur Durchführung des Verfahrens gemäß einem der Ansprüche 1 bis 10, mit einer Anzahl von steuerbaren Schutzschaltern (18a, 18b, 18c) in Teilpfaden (14, 16a, 16b) eines strahlennetzartigen Strompfades (8).
